# FASCICULE DE BREVET EUROPEEN

(11) **EP 2 441 523 B1**
(45) Date de publication et mention de la délivrance du brevet: **08.09.2021**
(21) Numéro de dépôt: 11185555.7
(22) Date de dépôt: 18.10.2011
(51) Int. Cl.: B05B 3/10, A01M 7/00, B05B 14/00

(54) **Dispositif de projection d'un fluide de traitement, et système de pulvérisation d'un fluide de traitement comprenant au moins un tel dispositif**
Spritzvorrichtung für eine Behandlungsflüssigkeit, und Zerstäubungssystem einer Behandlungsflüssigkeit, das mindestens eine solche Vorrichtung enthält
Device for spraying a treatment fluid and system for spraying a treatment fluid including at least one such device

(30) Priorité: 18.10.2010 FR 1058480
(43) Date de publication de la demande: 18.04.2012
(73) Titulaire: EXEL INDUSTRIES, 51200 Epernay (FR)
(72) Inventeur: Ballu, Patrick, 51100 REIMS (FR)
(74) Mandataire: Ahner, Philippe

(56) Documents cités:
- GB-A- 2 092 478
- US-A- 3 339 840
- US-A- 3 357 640
- US-A- 4 274 589
- US-A- 6 152 382
- US-A1- 2007 063 068
- None

## Description

La présente invention concerne un dispositif de projection d'un fluide de traitement. L'invention concerne également un système de pulvérisation d'un fluide de traitement, notamment dans un vignoble ou un verger, comprenant au moins un tel dispositif. Le domaine de l'invention est celui des engins agricoles du type pulvérisateur de produits phytosanitaires, équipés de rampes de pulvérisation.

Dans ce domaine, différents types d'installations mobiles de pulvérisation peuvent être utilisés pour les traitements agricoles, viticoles et arboricoles. En particulier, il est connu d'utiliser des caissons montés horizontalement ou verticalement sur un tracteur et produisant un courant d'air, sous forme d'une ou plusieurs nappes de pulvérisation, pour projeter un produit phytosanitaire sur des végétaux. De manière classique, des gicleurs projettent le produit phytosanitaire, sous forme liquide et sous pression, dans les nappes d'air issues du caisson. Ainsi, le flux de pulvérisation est dirigé sur les végétaux. Cependant, la manière dont le liquide phytosanitaire est projeté n'est pas totalement satisfaisante, par exemple lorsque l'on vise à épandre un volume de liquide relativement faible par unité de surface.

FR-A-2 497 439 décrit un système de pulvérisation d'un liquide de traitement, comportant au moins une buse rotative. En particulier, cette buse rotative est entraînée par un moteur à vitesse réglable. Le liquide à pulvériser est prélevé dans un réservoir et projeté par un ajutage sur la partie centrale de la buse. Un tel système n'est pas entièrement satisfaisant, notamment en termes de coût et d'encombrement. Par ailleurs, une dépression créée au niveau du dispositif est susceptible de déformer les nappes d'air et d'attirer les gouttelettes de liquide pulvérisé vers arrière, à l'inverse de la direction de pulvérisation.

EP-A-1 539 363 décrit un système de pulvérisation d'un liquide de traitement, comportant des moyens de génération d'un flux gazeux reliés à un ou plusieurs conduits tubulaires. Chaque conduit est configuré pour canaliser une partie du flux gazeux jusqu'à son extrémité, à laquelle est disposée un organe rotatif. Chaque organe rotatif présente une surface tronconique qui est tournée vers l'extrémité du conduit. Le liquide à pulvériser s'écoule sur cette surface, jusqu'à une arête au niveau de laquelle sont formées les gouttelettes entraînées par le flux gazeux. En pratique, l'organe rotatif est entraîné par une vis filetée disposée dans le flux gazeux. La vitesse de rotation de la vis, et donc de l'organe rotatif, est proportionnelle à la pression du flux gazeux qui est contrôlée par les moyens de génération. Par ailleurs, les conduits ne permettent pas de former des nappes d'air latérales régulières. Un tel système n'est donc pas entièrement satisfaisant.

US 2007/063068 A1 décrit un dispositif de pulvérisation à bol rotatif, comprenant des moyens de production de jets de conformation d'air répartis de façon uniforme autour du bol rotatif.

Le but de la présente invention est donc d'améliorer les dispositifs de projection de liquide de traitement existants.

A cet effet, l'invention a pour objet un dispositif de projection d'un liquide de traitement, notamment dans un vignoble ou un verger, notamment dans un vignoble ou un verger, tel que défini à la revendication 1.

Ainsi, l'invention permet d'améliorer la répartition du liquide de traitement pulvérisé sous forme de gouttelettes en direction des végétaux. L'organe compartimenteur est configuré pour permettre au flux d'air central de s'écouler depuis la première chambre vers la chambre d'échappement, où il s'échappe à l'arrière de l'organe rotatif. Ainsi, l'invention permet de « gaver » la chambre d'échappement en air et d'éviter la formation d'une dépression en amont de l'organe rotatif, ce qui perturberait la projection de liquide. A cet effet, l'organe compartimenteur peut notamment comporter une paroi délimitant la première chambre et la chambre d'échappement et dans laquelle sont ménagés des moyens de circulation d'air, tels que des orifices d'échappement. Egalement, en sortie de la chambre d'échappement, le flux d'air central rejoint les nappes d'air porteuses de gouttelettes et, dans le même temps, rabat ces gouttelettes sur l'axe central dans la direction de pulvérisation. De ce fait, le pompage de l'air ambiant par le flux de gouttelettes centrifugées est évité. Par ailleurs, la taille des gouttelettes de liquide de traitement est maîtrisée en fonction de la vitesse de l'organe rotatif, indépendamment du volume de liquide pulvérisé versé, lequel peut être régulé en débit, proportionnellement à la vitesse d'avance de l'engin agricole et/ou du volume foliant à traiter. Grâce aux moyens de circulation d'air répartis sensiblement sur les deux côtés de l'organe compartimenteur, la direction de pulvérisation du flux liquide pulvérisé définit un profil en ogive qui est sensiblement aplati sur les deux côtés.

D'autres caractéristiques avantageuses de l'invention sont définies aux revendications 2 à 12. L'invention concerne également un système de pulvérisation d'un liquide de traitement, notamment dans un vignoble ou un verger, tel que défini à la revendication 13. Avantageusement, le système est tel que défini aux revendications 14 ou 15.

L'invention sera mieux comprise à la lecture de la description qui va suivre, donnée uniquement à titre d'exemples non limitatifs et faite en référence aux dessins sur lesquels :
- la figure 1 est une vue arrière d'un tracteur équipé de caissons et d'un système de pulvérisation conforme à l'invention, ce système comprenant plusieurs dispositifs de projection de liquide de traitement également conformes à l'invention ;
- la figure 2 est une coupe selon la ligne II-II à la figure 1, montrant un dispositif de projection conforme à l'invention agencé sur un caisson ;
- la figure 3 est une vue à plus grande échelle du détail III à la figure 2 ;
- la figure 4 est une coupe selon la ligne IV-IV à la figure 3 ;
- la figure 5 est une vue de face du dispositif de projection, selon la flèche V à la figure 3 ;
- la figure 6 est une coupe analogue à la figure 3 pour un système de pulvérisation et un dispositif de projection conformes à un deuxième mode de réalisation de l'invention ;
- la figure 7 est une coupe selon la ligne VII-VII à la figure 6 ;
- la figure 8 est une vue en élévation selon la flèche VIII à la figure 6, montrant à plus grande échelle un détail du dispositif de projection selon une première configuration ;
- la figure 9 est une vue en élévation analogue à la figure 8, montrant à plus grande échelle un détail du dispositif de projection selon une deuxième configuration ;
- la figure 10 est une coupe analogue à la figure 3 pour un système de pulvérisation et un dispositif de projection conformes à un troisième mode de réalisation de l'invention ; et
- la figure 11 est une coupe analogue à la figure 2, montrant un système de pulvérisation conforme à un quatrième mode de réalisation de l'invention, lequel équipe une autre variante de caisson et comprend un dispositif de projection conforme au premier mode de réalisation de l'invention.

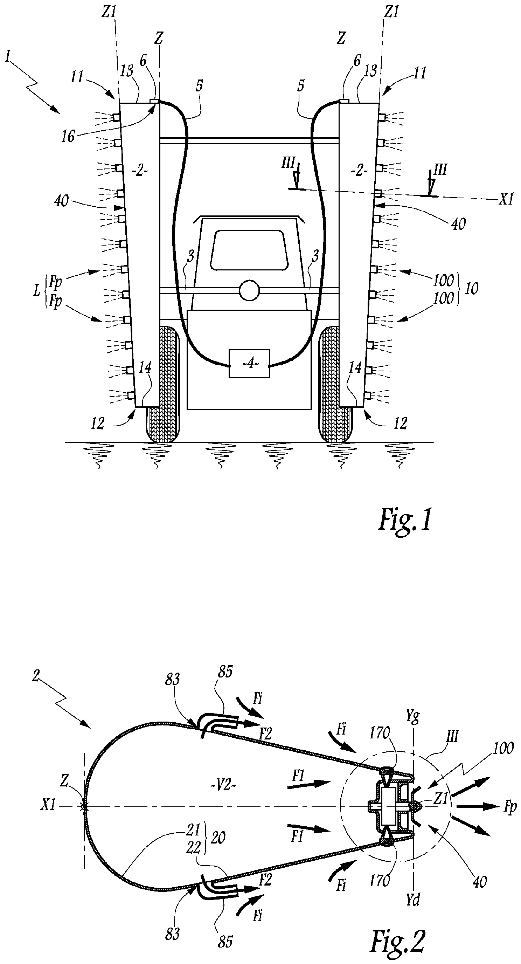

Sur les figures 1 à 5 est représenté un premier mode de réalisation d'un système de pulvérisation 10 pour liquide phytosanitaire de traitement L, ce système équipant un tracteur 1 et comprenant plusieurs dispositifs de projection 100.

Comme montré à la figure 1, le tracteur 1 comprend deux caissons allongés 2 semblables qui s'étendent chacun selon un axe longitudinal Z globalement vertical. Les caissons 2 sont disposés de part et d'autre du tracteur 1 et sont supportés par un portique 3. Des conduits 5 relient un compresseur d'air 4 à chacun des caissons 2. Les caissons 2 peuvent avoir d'autres dispositions et orientations, verticales, horizontales ou obliques, selon l'application pour laquelle le tracteur 1 est adapté. Dans la suite de la description, on qualifie d'inférieurs les éléments qui sont plus proches du sol que les éléments qualifiés de supérieurs.

Chaque caisson 2 est creux et comporte une extrémité supérieure 11, obstruée par un couvercle supérieur 13, et une extrémité inférieure 12, obstruée par un couvercle inférieur 14. Les couvercles 13 et 14 sont globalement perpendiculaires à l'axe longitudinal Z. Chaque couvercle supérieur 13 est percé d'une entrée d'air 16 pourvue d'un embout 6 qui raccorde chaque caisson 2 à un des conduits 5, de sorte que chaque caisson 2 peut être alimenté en air comprimé, au niveau de son entrée 16, par le compresseur 4.

Le profil de chaque caisson 2 est avantageusement décroissant, le long de l'axe longitudinal Z et d'un deuxième axe Z1 sensiblement vertical, entre l'entrée 16 et l'extrémité inférieure 12 du caisson 2. Le caisson 2 est facile à fabriquer, par exemple en rotomoulage, et son poids total est réduit.

En variante non représentée, le caisson 2 présente une section longitudinale sensiblement constante, ce qui en facilite la fabrication, par exemple par extrusion.

Chaque caisson 2 comporte une zone de projection 40 tournée à l'opposé du tracteur 1 par rapport à l'axe Z, c'est-à-dire du côté où sont situés les végétaux à traiter lorsque le tracteur 1 est en service. La zone de projection 40 de chaque caisson 2 s'étend le long de l'axe longitudinal Z1 du caisson 2 entre ses extrémités 11 et 12.

Chaque caisson 2 est pourvu de plusieurs dispositifs de projection 100, qui forment ensemble le système de pulvérisation 10 de liquide de traitement L. Plus précisément, chaque dispositif 100 est disposé légèrement en saillie à l'extérieur du caisson 2 au niveau de sa zone de projection 40. En outre, chaque dispositif 100 est alimenté en liquide L et configuré pour projeter un flux Fp de liquide L à l'opposé du tracteur 1 et du caisson 2.

La suite de la description concerne le caisson 2 situé à droite du tracteur 1 à la figure 1, l'autre caisson 2 étant identique.

La figure 2 montre une section transversale du caisson 2, prise perpendiculairement à l'axe Z1 au niveau d'un dispositif de pulvérisation 100. Le caisson 2 est creux, avec une paroi 20 qui délimite un volume interne V2. Dans le plan de la figure 2, cette paroi 20 est symétrique par rapport à un axe X1 qui est perpendiculaire à l'axe Z1, tandis que le dispositif 100 est centré sur cet axe X1. La paroi 20 présente une partie de paroi arrondie 21 du côté correspondant au tracteur 1, ainsi qu'une partie de paroi 22 sensiblement plane, inclinée par rapport à l'axe X1, qui se termine par le dispositif 100 du côté de la zone de projection 40.

En d'autres termes, le caisson 2 présente une géométrie évoquant la forme d'une goutte d'eau, ou d'une aile d'avion, dont la pointe correspond au dispositif 100. A l'intérieur du caisson 2, des flux d'air F1 s'écoulent en direction de la zone de projection 40 et du dispositif 100.

De part et d'autre de l'axe X1 dans le plan de la figure 2, deux sorties latérales 83 sont ménagées dans la paroi 22. Une buse coudée 85 est fixée dans chaque sortie latérale 83 et est destinée à l'écoulement d'un flux d'air F2 depuis l'intérieur vers l'extérieur du caisson 2, le long de la paroi 22 et sur l'extérieur de celle-ci.

En variante non représentée, les sorties 83 ne comportent pas de buse 85, ou bien la buse 85 présente une autre forme particulière. Par exemple, la buse 85 peut être rectiligne, en forme de cylindre de section circulaire dont l'embouchure est orientée en direction de la zone de projection 40. En fait, chaque sortie 83 peut comporter tout type d'organe adapté au guidage du flux F2 vers l'extérieur du caisson 2, en vue de son écoulement le long de la paroi 22.

Les sorties 83 sont des trous mais, dans un autre mode de réalisation de l'invention non représenté, elles peuvent être des fentes parallèles à l'axe longitudinal Z dont la longueur peut varier jusqu'à atteindre la longueur du caisson 2, considérée entre l'extrémité supérieure 11 et l'extrémité inférieure 12. Dans le cas où les sorties sont des trous, elles sont réparties, avantageusement de manière régulière, le long de l'axe longitudinal Z, entre les extrémités supérieure 11 et inférieure 12 du caisson 2.

A la figure 2, les sorties 83 sont situées dans le même plan de section transversale du caisson 2 que le dispositif 100. Toutefois, ceci n'est pas obligatoire. Les sorties 83 peuvent être situées dans différents plans perpendiculaires à l'axe longitudinal Z du caisson 2. Par exemple, les sorties 83 peuvent être situées dans un premier plan perpendiculaire à l'axe longitudinal Z, tandis que le dispositif 100 peut être situé dans un autre plan perpendiculaire à l'axe Z. Autrement dit, les sorties 83 et les dispositifs 100 peuvent être intercalées le long du caisson 2.

Lors du fonctionnement du système 10, le volume interne V2 du caisson 2 est alimenté en air comprimé par le compresseur 4 en passant par le conduit 5 et l'embout 6. L'air comprimé peut circuler dans le volume V2 depuis l'extrémité 11 vers l'extrémité 12, d'une part, en étant dirigé vers chaque dispositif 100 sous forme de flux centraux F1 et, d'autre part, en s'échappant par les sorties 83 et les buses 85 en formant les flux laminaires latéraux F2. Entre l'entrée 16 et les sorties 83, la section dégressive de chaque caisson 2 permet de compenser les pertes de charge de sorte que les flux d'air s'échappant des sorties 83 proches de l'extrémité inférieure 12 ont une pression sensiblement égale à ceux s'échappant des sorties proches de l'entrée 16.

En pratique, les flux F2 sont inducteurs, c'est-à-dire qu'ils entrainent par frottement des flux Fi d'air induit extérieur au caisson 2. Ces flux latéraux F2 et Fi forment de part et d'autre du caisson 2, également de part et d'autre de l'axe Z1 sur des côtés respectifs Yg et Yd, des nappes d'air qui agitent les végétaux et contribuent à entrainer le flux Fp de liquide L en direction de ces végétaux, selon une direction de pulvérisation Dp.

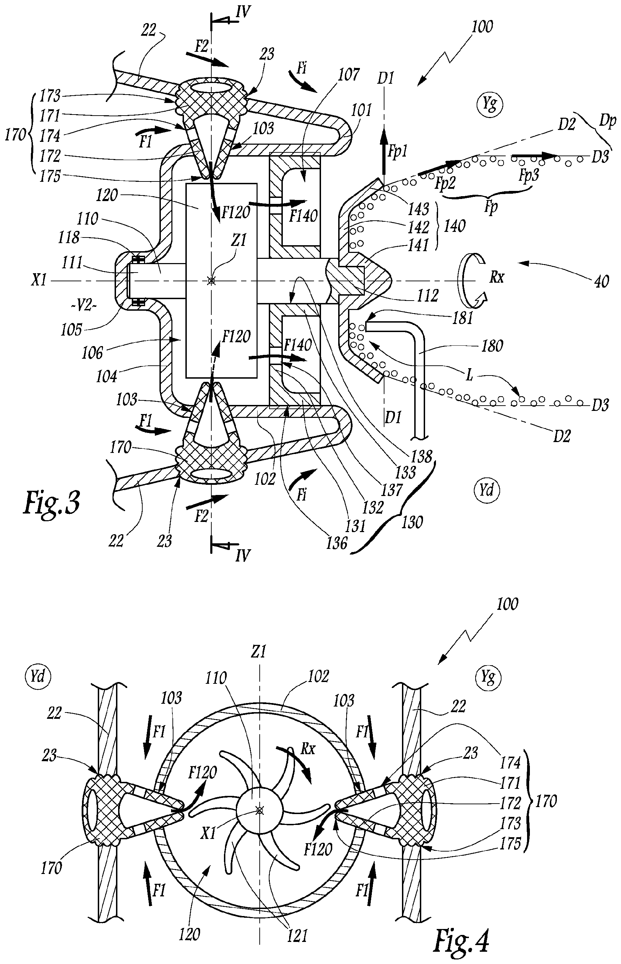

Les figures 3 et 4 montrent, à plus grande échelle, le dispositif 100 intégré dans le caisson 2 du côté de la zone de projection 40. En particulier, ce dispositif 100 comprend, d'une part un arbre 110 sur lequel sont montés une turbine 120 et un organe rotatif 140, et, d'autre part, un organe compartimenteur 130, des buses 170 et un conduit 180 d'alimentation en liquide L.

De part et d'autre de l'axe X1, un arc d'extrémité 101 prolonge la paroi 22 vers une paroi cylindrique 102, laquelle est centrée sur l'axe X1 et s'étend en retrait de la zone de projection 40 dans le volume V2. Une paroi radiale 104 s'étend du côté de la paroi 102 opposé à l'arc 101, séparant le volume V2 interne au caisson 2 de la zone de projection 40 extérieure au caisson 2. Au milieu de la paroi 104 est agencée une partie centrale 105, disposée en retrait dans le volume V2.

De préférence, les parties 101, 102, 103, 104 et 105 situées à l'extrémité de la paroi 22 du côté de la zone de projection 40 sont obtenues, pour chaque dispositif 100 du système 10, lors du rotomoulage du caisson 2. En variante, ces parties peuvent être façonnées postérieurement à la fabrication du caisson 2, par exemple par thermoformage, par injection, ou par usinage.

En pratique, la partie centrale 105 comporte un palier 118 et est configurée pour supporter une première extrémité 111 de l'arbre 110 qui est mobile selon un mouvement de rotation Rx autour de l'axe X1. Ce palier 118 peut être un palier lisse ou un palier à corps roulant.

En variante non représentée, la partie centrale 105 ne comporte pas de palier 118, mais l'état de surface de son alésage, c'est-à-dire sa surface cylindrique intérieure tournée vers l'axe X1 du côté de la zone de projection 40, est adapté pour limiter les frottements lors de la rotation de l'arbre 110.

Une deuxième extrémité 112 de l'arbre 110, qui est opposée à la première extrémité 111 et disposée légèrement en saillie du caisson 2 dans la zone de projection 40, supporte l'organe rotatif 140. Plus précisément, cet organe rotatif 140 comprend un moyeu 141 monté sur l'extrémité 112 de l'arbre 110, une partie annulaire radiale 142 en forme de disque et une bordure 143 inclinée vers la zone de projection 40, plus précisément dans la direction de pulvérisation Dp du flux projeté Fp.

En variante non représentée, l'organe rotatif 140 peut être configuré comme une cuvette concave dont la concavité est orientée dans la direction de pulvérisation Dp, ou bien simplement comme un disque plan.

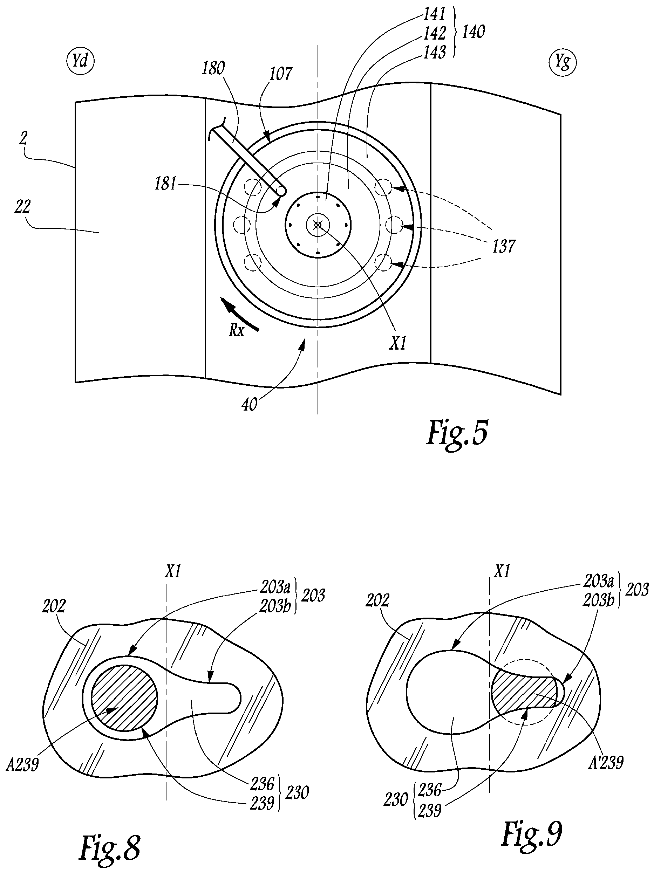

A ce stade, on remarque qu'en raison de l'agencement relatif des éléments 110, 120 et 130 dans l'espace cylindrique délimité par la paroi 102, le dispositif 100 présente une forme sensiblement cylindrique centrée sur l'axe X1, comme montré à la figure 5.

Comme montré aux figures 2 à 4, le dispositif 100 comprend deux buses 170 d'injection d'air, chaque buse 170 étant positionnée de part et d'autre de l'axe X1 sur les côtés Yg et Yd. A cet effet, des ouvertures taraudées 23 sont ménagées dans la paroi 22, tandis que des ouvertures 103 sont ménagées dans la paroi 102. Chaque buse 170 est constituée d'une tête 171 montée dans l'ouverture taraudée 23 à l'aide d'un filetage complémentaire 173, ainsi que d'un corps conique 172 qui traverse la paroi 102 au niveau de l'ouverture 103. Le corps 172 comprend des orifices 174 permettant au flux d'air comprimé F1 de pénétrer dans la buse 170 et de ressortir par un débouché 175 sous forme d'un flux d'air F120 afin d'entraîner la turbine 120. En d'autres termes, la buse 170 agencée dans la paroi 102 du dispositif 100 est configurée pour prélever un flux d'air F1 d'un côté de cette paroi 102 qui est opposé à l'organe rotatif 140, c'est-à-dire dans le volume interne V2 du caisson 2, pour former le flux d'air central F120 et F140.

En manipulant la tête 171, l'orientation relative des orifices 174 par rapport au flux F1 est modifiée. De ce fait, les paramètres d'écoulement du flux F120 sont variables, notamment le débit et/ou la pression du flux F120 est variable, et donc la vitesse de rotation de la turbine 120 est réglable.

En variante non représentée, chaque buse 170 présente des dimensions inférieures et la tête 171 ne présente pas de filetage 173. Dans ce cas, les ouvertures 23 sont absentes et la buse 170 est positionnée seulement dans l'ouverture 103 de la paroi 102, mais l'orientation des orifices 174 ne peut pas être modifiée manuellement.

Selon une autre variante non représentée, le dispositif 100 peut comporter une unique buse 170 d'un seul côté de l'axe X1, ou bien des buses 170 configurées différemment. Par exemple, au lieu d'être manuelle, l'opération d'orientation des orifices 174 peut être automatisée par l'intermédiaire d'un actionneur auxiliaire.

Selon une variante particulière non représentée, des buses 170 différentes peuvent être teintées de couleurs différentes, ou comporter des marquages spécifiques, selon la forme ou la section de leur sortie d'air moteur.

La turbine 120 comprend plusieurs ailettes 121 qui sont rigidement fixées sur l'arbre 110, dans sa partie médiane, entre les extrémités 111 et 112 mais en étant plus rapprochées de l'extrémité 111. En pratique, le flux F120 sortant de chaque débouché 175 actionne les ailettes 121 et entraîne la turbine 120 selon le mouvement de rotation Rx autour de l'axe X1. Dans ce cas, l'arbre 110 est entraîné en rotation, et l'organe rotatif 140 qui est lié à l'arbre 110 est également entraîné en rotation autour de l'axe X1 selon le mouvement Rx. En d'autres termes, les moyens d'entraînement en rotation Rx de l'organe rotatif 140 comprennent une turbine 120 qui est solidaire en rotation de l'organe rotatif 140, qui est munie de plusieurs ailettes 121 et qui est située sur le trajet du flux d'air central F120, lequel est apte à entraîner conjointement la turbine 120 et l'organe rotatif 140 en rotation Rx autour de l'axe central X1. En modifiant les paramètres d'écoulement du flux F120, la vitesse de rotation Rx de l'organe rotatif 140 peut donc être modifiée.

Les ailettes 121 sont de préférence « perpendiculaires » et non hélicoïdes, c'est-à-dire que chaque ailette 121 s'étend perpendiculairement à un plan défini par les axes Z1 et X1 et n'est pas enroulée ou «torsadée» autour de l'axe X1. En effet, ce profil particulier permet de transmettre une puissance plus importante sous l'action du flux d'air F120. Autrement dit, les ailettes des turbines hélicoïdes ou hélio-centrifuges recevant un même flux d'air F120 tournent moins rapidement que les ailettes 121 de profil perpendiculaire.

Comme montré à la figure 3, l'organe compartimenteur 130 présente une forme globalement annulaire centrée sur l'axe X1. Cet organe 130 est constitué par une paroi tubulaire externe 131 et une paroi tubulaire interne 133 qui sont centrées sur l'axe X1 et reliées par une paroi annulaire radiale 132. Cette paroi 132 délimite d'une part, du côté orienté vers la paroi 104, une chambre 106 dans laquelle est agencée la turbine 120 et, d'autre part, du côté orienté vers la zone de projection 40, une chambre d'échappement 107 qui est ouverte sur l'extérieur du caisson 2 au niveau de l'organe rotatif 140. En pratique, cette chambre 107 est située juste en amont et radialement autour de l'organe rotatif 140 suivant la direction de pulvérisation Dp du flux Fp.

Par ailleurs, la paroi 132 de l'organe compartimenteur 130 présente plusieurs orifices d'échappement 137 permettant au flux d'air F120 de passer de la chambre 106 vers la chambre 107 sous forme d'un flux d'air F140. En particulier, ce flux F140 s'échappe du dispositif 100 par la chambre 107, entre la paroi 22 et l'organe rotatif 140, plus précisément entre l'arc 101 et la bordure 143. Avantageusement, ce flux F140 permet de « gaver » la chambre d'échappement 107 en air et d'éviter la formation d'une dépression dans la zone de projection 40, en amont de l'organe 140 suivant la direction de pulvérisation, et plus précisément dans la chambre d'échappement 107.

Comme montré à la figure 5, les orifices 137 ne sont pas répartis uniformément autour de l'axe X1. En effet, la paroi 132 ne comporte pas d'orifices 137 le long de l'axe Z1. Les orifices 137 sont ménagés dans la paroi 132 de l'organe 130 sur deux côtés Yg et Yd situés de part et d'autre de l'axe central X1, plus précisément de part et d'autre d'un plan comprenant les axes X1 et Z1.

En d'autres termes, l'organe compartimenteur 130 comporte des moyens 137 de circulation du flux d'air central F120 et F140 depuis la première chambre 106 vers la chambre d'échappement 107, et ces moyens de circulation 137 sont agencés sensiblement sur deux côtés Yg et Yd de l'organe compartimenteur 130 qui sont diamétralement opposés de part et d'autre de l'axe central X1. Comme décrit ci-après, cet agencement particulier des orifices 137 permet de modifier le profil du flux Fp.

Du côté opposé à l'axe X1, la paroi 131 comprend une surface cylindrique 136 configurée pour positionner l'organe 130 par rapport à la paroi 102. En particulier, la surface 136 peut être filetée. Dans ce cas, la paroi 102 présente, sur son côté intérieur tourné vers l'axe X1, un taraudage complémentaire du filet de la surface 136. En d'autres termes, l'organe 130 est ajusté ou vissé dans la partie 102, et peut être déplacé axialement suivant l'axe X1 afin de régler les volumes respectifs des chambres 106 et 107. En fonction du volume des chambres 106 et 107, les paramètres d'écoulement des flux F120 et F140 sont modifiées. En particulier, le débit et la pression des flux F120 et F140 sont variables.

La paroi 133 comprend un alésage cylindrique 138 prévu pour supporter l'arbre 110, au repos mais surtout lorsque cet arbre 110 est entraîné en rotation. De ce fait, l'état de surface de l'alésage 138 est adapté pour limiter les frottements lors de la rotation de l'arbre 110. En variante non représentée, un palier peut être agencé entre l'arbre 110 et l'alésage 138.

Le conduit 180 est relié à un réservoir de liquide de traitement L, non représenté, et permet donc d'alimenter le dispositif 100 en liquide de traitement L. Plus précisément, le liquide L s'écoule avec une pression relativement faible par un orifice de sortie 181 disposé à l'extrémité du conduit 180 et est déversé sur le disque 142 de l'organe 140. De manière optionnelle, pour chaque dispositif 100 du système 10, le conduit 180 peut être situé dans un plan sensiblement vertical, ou bien être légèrement incliné par rapport à l'axe Z1, pour permettre l'écoulement naturel par gravité du liquide L vers l'orifice 181. De préférence, l'orifice 181 est configuré comme un ajutage permettant de modifier l'écoulement du liquide L, notamment sa pression et/ou son débit. Avantageusement, l'alimentation en liquide L est asservie à la vitesse d'avance du tracteur 1. Comme l'organe 140 est entraîné en rotation Rx, le liquide L forme des gouttelettes qui se répartissent autour de l'axe X1 sur le disque 142 et sont centrifugées vers la bordure 143.

A ce stade, les gouttelettes de liquide L sont éjectées de l'organe 140 dans une direction de centrifugation D1, sous forme d'un flux liquide centrifuge Fp1. En pratique, cette direction D1 correspond dans l'espace à un plan qui est perpendiculaire à l'axe central X1 et qui comprend l'arête de la bordure 143, mais elle est représentée par deux lignes situées de part et d'autre de l'organe 140 dans le plan de la figure 3. En outre, la taille des gouttelettes centrifugées dépend de la vitesse de rotation Rx de l'organe 140, ainsi que de la pression et du débit du liquide L versé par l'ajutage 181.

En parallèle, l'air comprimé s'écoule depuis le caisson 2, en suivant les flux F1, F120 et F140, de manière centrale relativement au dispositif 100. En particulier, la chambre d'échappement 107 est configurée pour acheminer le flux d'air central F140 à l'interface avec le flux liquide centrifuge Fp1. Ainsi, le flux d'air central F140 rencontre le flux liquide centrifuge Fp1 et modifie sa trajectoire, depuis la direction D1 vers une direction D2 qui est plus rapprochée de l'axe X1 du côté de la zone de projection 40. En d'autres termes, à l'interface avec le flux F140, le flux Fp1 est réorienté sous forme d'un flux liquide projeté Fp2 qui est dirigé selon la direction D2. De plus, l'écoulement central de flux F140 évite la formation d'une dépression dans la chambre 107 par gavage d'air, et évite donc que le flux liquide Fp1 ne soit rabattu vers l'arrière par « effet de pompage » pour pénétrer dans cette chambre 107.

Comme montré à la figure 5, les orifices 137 ne sont pas répartis uniformément autour de l'axe X1. Ces orifices 137 sont ménagés dans la paroi 132 sur les côtés Yg et Yd, mais pas le long de l'axe Z1. Ainsi, la trajectoire du flux Fp1 n'est pas modifiée par le flux central F140 de manière uniforme autour de l'axe X1. Par conséquent, le flux Fp2 est aplati sur les côtés Yg et Yd, c'est-à-dire parallèlement à un plan longitudinal du caisson 2, comprenant les axes X1 et Z1. De ce fait, la zone de projection 40 entre deux dispositifs 100 adjacents est remplie de gouttelettes appartenant aux flux Fp1 et Fp2, et donc la répartition longitudinale du flux projeté Fp est améliorée.

Par ailleurs, sur les côtés Yg et Yd, à l'interface avec le flux d'air latéral F2 et le flux induit Fi, la trajectoire du flux Fp2 est à son tour modifiée, depuis la direction D2 vers une direction D3 qui est plus rapprochée de l'axe X1 du côté de la zone de projection 40. Ainsi, le liquide de traitement L est projeté sous forme d'un flux liquide pulvérisé Fp3 en direction des végétaux à traiter. De préférence, comme représenté à la figure 3, la direction D3 du flux Fp3 est sensiblement parallèle à l'axe X1. Néanmoins, cette direction D3 peut être réglée en fonction du débit et/ou de la pression de l'air comprimé circulant dans le caisson 2, et donc des paramètres d'écoulements des flux F1, F120, F140 et F2.

En pratique, les flux F140, F2 et Fi peuvent se rencontrer en différents points de la zone de projection 40, et donc orienter les flux liquide Fp1, Fp2 et/ou Fp3 d'une manière différente. Egalement, on remarque que les gouttelettes de liquide L pulvérisée présentent une nature volatile. Ainsi, on considère que le flux Fp de liquide L projeté par le dispositif 100 correspond approximativement à la réunion des flux Fp2 et Fp3.

De ce fait, dans un but de simplification, on considère que la direction effective de pulvérisation Dp du flux liquide pulvérisé Fp correspond conjointement aux directions D2 et D3. Ainsi, cette direction de pulvérisation Dp du flux Fp définit un profil en ogive qui est basé sur l'organe rotatif 140, plus précisément sur sa bordure 143, et qui est sensiblement aplati sur les deux côtés Yg et Yd. Dans le plan de la figure 3, ces deux côtés sont diamétralement opposés de part et d'autre de l'axe central X1. Plus précisément, dans l'espace, le profil en ogive du flux Fp est aplati sur les deux côtés Yg et Yd qui sont situés de part et d'autre d'un plan comprenant les axes X1 et Z1.

Le flux d'air central F140 contribue à gaver la dépression de la chambre d'échappement 107, à modifier la trajectoire du flux liquide centrifuge Fp1 et à entraîner les gouttes de liquide L jusqu'aux nappes d'air latérales, lesquelles sont constituées des flux d'air laminaire F2 et induit Fi. Les éléments 103, 130 et 170 forment des moyens d'acheminement, ou de guidage, des flux centraux F1, F120 et F140 vers l'organe rotatif 140. En particulier, les éléments 103, 130, 136, 170, 173 et 174 forment des moyens d'ajustement des paramètres d'écoulement de ces flux F120 et F140, tel que le débit et/ou la pression.

En effet, comme le flux F140 découle directement du flux F120, on remarque qu'en manipulant la tête 171 et en modifiant l'orientation relative des orifices 174 par rapport au flux F1, et donc en faisant varier les paramètres d'écoulement du flux F120, les paramètres d'écoulement du flux F140 situé en aval du flux F120 sont variables. De ce fait, la direction de pulvérisation D2 et/ou D3 du flux liquide pulvérisé Fp2 et/ou Fp3 est réglable. Autrement dit, une variation d'un ou plusieurs paramètres d'écoulement est apte à modifier la direction de pulvérisation D2 et/ou D3 du flux liquide pulvérisé Fp et/ou la vitesse de rotation Rx de l'organe rotatif 140.

En variante non représentée, la paroi 132 de l'organe compartimenteur 130 ne comporte pas d'orifices 137. Par exemple, l'organe 130 peut être configuré pour que l'alésage 138 soit diamétralement écarté de l'arbre 110, formant ainsi un jeu annulaire radial prévu pour l'écoulement du flux F140 depuis la chambre 106 vers la chambre 107, jusqu'au flux liquide centrifuge Fp1. Dans ce cas, la partie centrale 105 est alors configurée pour supporter seule l'arbre 110 lors de son mouvement de rotation Rx. Autrement dit, les moyens de circulation du flux d'air central F120 et F140 depuis la première chambre 106 vers la chambre d'échappement 107 comprennent le jeu prévu entre l'alésage 138 et l'arbre 110. Dans le cadre de l'invention, ce jeu peut être réparti sur les deux côtés Yg et Yd de l'organe compartimenteur 130, de sorte que le flux pulvérisé Fp définisse un profil en ogive sensiblement aplati sur les deux côtés Yg et Yd.

Selon une autre variante non représentée, l'alésage 138 peut être cannelé afin de permettre à la fois l'écoulement du flux F140 et le guidage de l'arbre 110. Autrement dit, les moyens de circulation du flux d'air central F120 et F140 depuis la première chambre 106 vers la chambre d'échappement 107 comprennent les cannelures prévues entre l'alésage 138 et l'arbre 110. Dans le cadre de l'invention, ces cannelures peuvent être réparties sur les deux côtés Yg et Yd de l'organe compartimenteur 130, de sorte que le flux pulvérisé Fp définisse un profil en ogive sensiblement aplati sur les deux côtés Yg et Yd.

Selon une autre variante non représentée, un déflecteur et/ou un collecteur peuvent être agencés sur le pourtour de l'arc 101, autrement dit agencés radialement autour d'au moins une partie l'organe rotatif 140, afin de modifier le profil des flux F140 et Fp1. De préférence, le collecteur peut être relié à un réservoir de liquide de traitement L afin de récupérer le liquide L qui est stoppé à son contact.

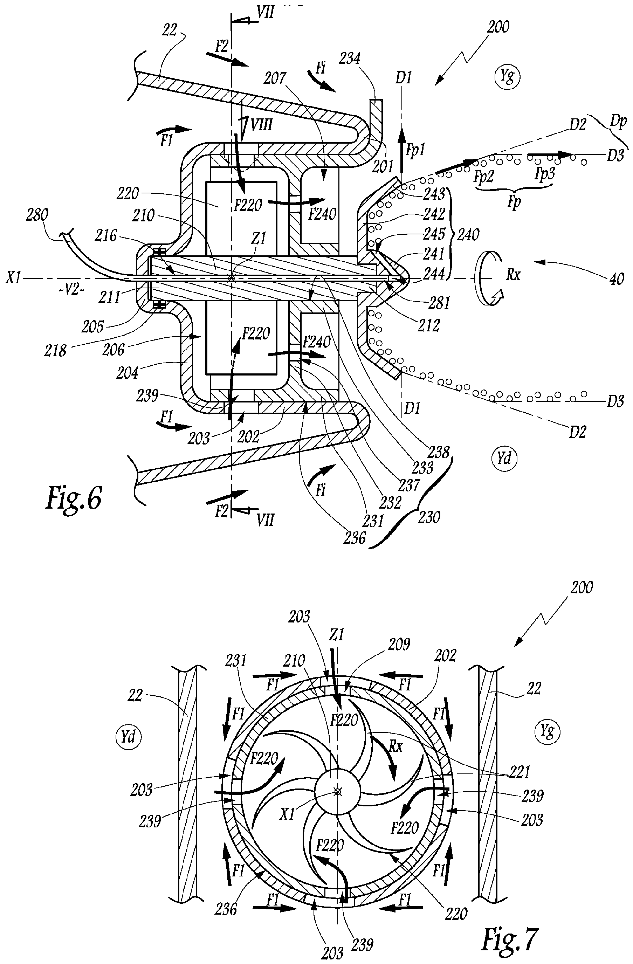

Sur les figures 6 à 9 est représenté un deuxième mode de réalisation d'un dispositif de projection 200 conforme à l'invention. En pratique, ce dispositif 200 équipe une variante du système de pulvérisation 10 agencé sur le caisson 2.

Certains éléments constitutifs du dispositif de projection 200 sont identiques aux éléments constitutifs du dispositif de projection 100 du premier mode de réalisation, décrit plus haut, et portent les mêmes références augmentées de 100. Il s'agit de l'arc 201, des parois 202, 204 et 205, des orifices 203, des chambres 206 et 207, de l'arbre 210 avec ses extrémités 211 et 212, du palier 218, de la turbine 220 comprenant des ailettes 221, de l'organe compartimenteur 230, des parois 231, 232 et 233, de la surface 236, des orifices 237, de l'alésage 238, de l'organe rotatif 240, du moyeu 241, du disque 242, de la bordure 243, ainsi que des flux d'air centraux F220 et F240. D'autres références sont invariables, il s'agit des flux F1, F2, Fi, Fp1, Fp2, Fp3 et Fp, du mouvement de rotation Rx autour de l'axe X1 qui est perpendiculaire à l'axe Z1, des côtés Yg et Yd, ainsi que des directions D1, D2, D3 et Dp.

Les différences se retrouvent principalement au niveau des moyens d'alimentation du dispositif 200 en liquide L, des moyens d'acheminement des flux centraux F1, F220 et F240 vers l'organe rotatif 240, ainsi que des moyens d'ajustement des paramètres d'écoulement de ces flux F220 et F240.

L'alimentation du dispositif 200 en liquide L se fait par un conduit 280 qui comporte une extrémité 281 et est relié à un réservoir de liquide de traitement L, non représenté. Le conduit 280 traverse un alésage 216, lequel est percé au centre de l'arbre 210 entre les extrémités 211 et 212. En outre, le moyeu 241 de l'organe rotatif 240 comporte un orifice central 244 et un orifice latéral 245 reliés entre eux. L'orifice 244 est aligné avec l'alésage 216, tandis que l'orifice latéral 245 est dirigé vers la partie annulaire 242 du côté de la zone de projection 40. Le conduit 280 débouche à son extrémité 281 dans l'orifice 244, le reliant ainsi avec un réservoir de liquide de traitement L. Le liquide L peut donc s'écouler depuis le réservoir vers l'orifice 245 et se déverser sur la partie annulaire 242.

Le flux d'air comprimé F1 circulant dans le volume V2 du caisson 2 pénètre dans la chambre 206, sous forme d'un flux F240, en passant par des orifices 203 et 239 qui se font face dans un plan perpendiculaire à l'axe X1. Comme visible à la figure 7, le dispositif 200 comporte plusieurs couples d'orifices 203 et 239. Plus précisément, chaque orifice 203 est délimité dans la paroi 202 du caisson 2 et présente une forme de goutte, avec une partie circulaire élargie 203a qui est reliée à une partie mince 203b. Chaque orifice 239 est délimité dans la partie cylindrique externe 231 de l'organe 230, tandis que la surface cylindrique 236 est lisse et peut pivoter relativement à la paroi cylindrique 202 dans laquelle elle est ajustée.

En pratique, l'organe compartimenteur 230 est mobile en rotation autour de l'axe central X1 par l'intermédiaire d'un doigt d'indexage 234. Ainsi, l'organe 230 peut être déplacé entre deux configurations extrêmes, montrées aux figures 8 et 9. Une butée non représentée empêche le doigt d'indexage 234 et l'organe 230 de pivoter au-delà de ces positions extrêmes.

Dans la première configuration de la figure 8, l'orifice 239 est aligné avec la partie 203a et le flux F1 peut s'écouler à travers tout l'orifice 239 dont on note A239 l'aire. Cette aire est représentée en gris à la figure 8. En revanche, dans la deuxième configuration de la figure 9, l'orifice 239 est aligné avec la partie 203b et donc partiellement recouvert par la paroi 202. Dans ce cas, le flux d'air F220 s'écoule à travers une partie de l'orifice 239, dont on note A'239 l'aire. Cette aire est inférieure à l'aire A239 et est représentée en grisé à la figure 9.

Par conséquent, le flux d'air F1 qui pénètre dans la chambre 206 en formant le flux F220 peut être régulé. Les paramètres d'écoulement du flux F220, qui entraîne la turbine 220, peuvent donc être ajustés. De ce fait, les paramètres d'écoulement du flux d'air F240 qui découle directement du flux F120 et qui circule depuis la chambre 206 vers la chambre 207 peuvent être maîtrisés.

En variante non représentée, les orifices 203 et 239 peuvent présenter des profils différents, notamment des profils inversés. Dans ce cas, l'orifice 203 agencé dans la paroi 202 présente une forme circulaire, tandis que l'orifice 239 ménagé dans la paroi 231 présente une forme de goutte avec une partie circulaire élargie et une partie mince.

Selon une autre variante non représentée, chaque couple d'orifices 203 et 239, répartis respectivement sur les parois 202 et 231 autour de l'axe central X1, peut présenter des formes particulières, de manière que les différents couples ne permettent pas simultanément le passage du flux F220. Autrement dit, les paramètres d'écoulement du flux d'air F240 sont réglables en fonction du ou des couples d'orifices 203 et 239 sélectionnés, qui laissent alors passer le flux F220 vers la chambre 206, et ceci dans des conditions particulières prédéterminées.

En d'autres termes, le doigt 234 constitue des moyens de déplacement de l'organe compartimenteur 230, configurés pour ajuster un ou plusieurs paramètres d'écoulement du flux d'air central F220 et F240 et/ou pour modifier le volume de la première chambre 206.

Selon une autre variante non représentée, l'organe 230 peut être déplacé en rotation par des moyens de déplacement différents du doigt d'indexage 234. Par exemple, la rotation de l'organe 230 peut être automatisée en utilisant un actionneur auxiliaire, non représenté. Dans ce cas, la surface S230 de passage de l'air entre les orifices 203 et 239 peut être réglée avec précision.

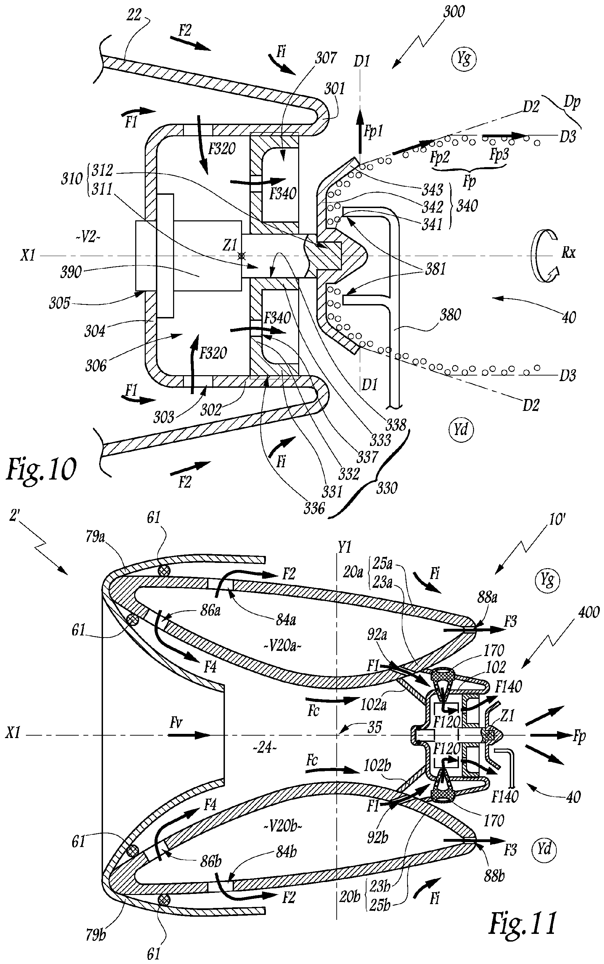

Sur la figure 10 est représenté un troisième mode de réalisation d'un dispositif de projection 300 conforme à l'invention. En pratique, ce dispositif 300 équipe une troisième variante du système de pulvérisation 10 agencé sur le caisson 2.

Certains éléments constitutifs du dispositif de pulvérisation 300 sont identiques aux éléments constitutifs du dispositif de pulvérisation 100 décrit plus haut, et portent les mêmes références augmentées de 200. Il s'agit de l'arc 301, des parois 302 et 304, des orifices 303, des chambres 306 et 307, de l'arbre 310 avec ses extrémités 311 et 312, de l'organe compartimenteur 330, des parois 331, 332 et 333, de la surface 336, des orifices 337, de l'alésage 338, de l'organe rotatif 340, du moyeu 341, du disque 342, de la bordure 343, du conduit 380, ainsi que des flux d'air centraux F320 et F340. D'autres références sont invariables, il s'agit des flux F1, F2, Fi, Fp1, Fp2, Fp3 et Fp, du mouvement de rotation Rx autour de l'axe X1 qui est perpendiculaire à l'axe Z1, des côtés Yg et Yd, ainsi que des directions D1, D2, D3 et Dp.

Les différences se retrouvent principalement au niveau des moyens d'alimentation du dispositif 300 en liquide de traitement L, à savoir le conduit 380, des moyens d'acheminement des flux centraux F1, F320 et F340 vers l'organe rotatif 340, ainsi que des moyens d'entraînement de l'arbre 310, constitués par un moteur 390 disposé dans la chambre 306.

De préférence, le moteur 390 est un moteur électrique de faible puissance, avec par exemple une puissance nominale de l'ordre de quelques dizaines de Watts. Le moteur 390 comporte un épaulement adapté pour son positionnement dans une ouverture 305 qui est ménagée dans la paroi radiale 304. Le moteur 390 est rigidement lié à l'extrémité 311 de l'arbre 310, lequel est logé dans l'alésage 338. Le moteur 390 tourne avec une vitesse de rotation variable, réglable en fonction de son courant ou de sa tension d'alimentation, ce qui permet de faire varier la vitesse de rotation Rx de l'organe 340 et donc de modifier la taille des gouttelettes centrifugées suivant le flux liquide centrifuge Fp1. En variante, le moteur 390 peut présenter différentes configurations et agencements adaptés à la présente application.

Par ailleurs, le conduit 380 comporte plusieurs orifices de sortie 381 répartis radialement sur le pourtour du disque 342. Ainsi, la répartition du liquide L versé sur le disque 342 est améliorée par rapport à un conduit d'alimentation comportant un unique orifice ou ajutage. Optionnellement, les orifices 381 sont configurés comme des ajutages permettant de modifier l'écoulement du liquide L, notamment sa pression et/ou son débit.

Le dispositif 300 montré à la figure 10 ne comprend pas de moyens d'ajustement des paramètres d'écoulement des flux d'air centraux F320 et F340. Toutefois, de préférence, ce dispositif 300 peut être équipé de tels moyens d'ajustement similaires à ceux des modes de réalisation précédents. Par exemple, le dispositif 300 peut comporter une ou plusieurs buses d'injection d'air similaires aux buses 170 appartenant au dispositif 100. Selon un autre exemple, le dispositif 300 peut comporter un organe 330 muni d'un doigt de réglage et des ouvertures 303 présentant un profil particulier, notamment en goutte d'eau, de manière similaire au dispositif 200. Par ailleurs, d'autres moyens d'ajustement des paramètres d'écoulement du ou des flux d'air centraux F320 et F340, adaptés à la présente application, peuvent être mis en œuvre sans sortir du cadre de l'invention.

Sur la figure 11 est représenté un quatrième mode de réalisation d'un système de pulvérisation 10' conforme à l'invention, équipant un caisson 2' et comprenant un dispositif de projection 400 similaire au dispositif 100.

Certains éléments constitutifs du système de pulvérisation 10' sont identiques aux éléments constitutifs du système de pulvérisation 10 décrit plus haut, et portent les mêmes références. Il s'agit des buses 170, des flux F1, F2, Fi et Fp, de l'axe X1 et de l'axe Z1 perpendiculaires entre eux, des côtés Yg et Yd, ainsi que des directions D1, D2, D3 et Dp.

La structure du caisson 2' est différente de la structure du caisson 2 des précédents modes de réalisation, mais présente un fonctionnement similaire. Un caisson 2' peut être disposé de chaque côté d'un tracteur 1 tel que montré à la figure 1. Chaque caisson 2' comporte une zone d'admission 30 d'air extérieur au caisson 2' qui est tournée à l'opposé de la zone de projection 40.

Comme montré à la figure 11, le caisson 2' comprend deux parois creuses 20a et 20b qui sont situées sur les côtés Yg et Yd symétriquement de part et d'autre de l'axe central X1 et qui, en coupe transversale au caisson 2', sont en forme d'ovales aplatis. La paroi 20a définit un volume interne V20a et la paroi 20b définit un volume interne V20b. L'entrée 16 du caisson 2', montrée à la figure 1, communique avec les volumes V20a et V20b.

Un passage 24, situé entre les parois 20a et 20b et centré sur l'axe X1, relie la zone d'admission 30 à la zone de projection 40. Ce passage 24 permet à de l'air extérieur au caisson 2' de circuler de part et d'autre du caisson 2' le long de l'axe X1, depuis la zone d'admission 30 vers la zone de projection 40. Le passage 24 et les parois 20a et 20b s'étendent entre l'extrémité supérieure 11 et l'extrémité inférieure 12 du caisson 2', montrées à la figure 1. Lorsqu'on parcourt l'axe X1 depuis la zone d'admission 30 jusqu'à la zone de projection 40, le passage 24 est d'abord convergent, entre la zone d'admission 30 et un col 35 du passage 24, puis divergent, entre le col 35 et la zone de projection 40. Le col 35 présente, dans le plan de la figure 11, une section de plus faibles dimensions par rapport aux zones d'admission 30 et de projection 40. On définit un axe Y1 qui est situé au niveau du col 35 et qui est perpendiculaire aux axes X1 et Z1.

Chaque paroi creuse 20a et 20b comprend une portion interne 23a ou 23b et une portion externe 25a ou 25b, qui est plus éloignée de l'axe X1 que la portion interne 23a ou 23b. Les portions internes 23a et 23b définissent la géométrie convergente-divergente du passage 24. Les portions externes 25a et 25b définissent la géométrie extérieure du caisson 2'.

Les portions externes 25a et 25b des parois 20a et 20b comportent chacune une sortie latérale 84a ou 84b qui est un trou plus rapproché de la zone d'admission 30 que de la zone de projection 40. Les portions internes 23a et 23b des parois creuses 20a et 20b sont percées chacune d'une sortie intérieure amont 86a ou 86b, ainsi que d'une sortie intérieure aval 92a et 92b. Les sorties intérieures 86a et 86b sont des trous qui débouchent dans la partie convergente du passage 24 et qui sont plus rapprochés de la zone d'admission 30 que du col 35, tandis que les sorties intérieures 92a et 92b sont des trous qui débouchent directement dans le dispositif 400.

A cet effet, la paroi cylindrique 102 est prolongée, de part et d'autre de l'axe X1 dans le passage 24, par des parois parallélépipédiques 102a et 102b qui sont respectivement raccordées aux parois 23a et 23b. Ainsi, les flux F1 provenant des sorties 92a et 92b sont guidés directement dans les buses 170.

Egalement, chaque paroi creuse 20a et 20b comporte une sortie extrême 88a ou 88b sous la forme d'un trou ménagé dans la paroi creuse 20a ou 20b du côté de la zone de projection 40, au niveau de la jonction entre la portion interne 23a ou 23b et la portion externe 25a ou 25b.

Comme le montre la figure 11, chaque caisson 2' comporte un premier organe de guidage 79a et un deuxième organe de guidage 79b qui sont globalement en forme de demi-tubes et qui sont situés au niveau de la zone d'admission 30. Chaque organe 79 et 79b présente un profil courbe et enveloppe la paroi, respectivement 20a ou 20b, du côté de la zone d'admission 30. Chaque organe de guidage 79a et 79b est fixé à la paroi creuse 20a ou 20b du caisson 2' par des moyens d'assemblage non représentés, par exemple des vis ou des rivets, qui sont répartis le long de l'axe longitudinal Z du caisson 2'. Du côté de la portion externe 25a ou 25b, de même que du côté de la portion interne 23a ou 23b, c'est-à-dire dans le passage 24, chaque organe 79a et 79b s'étend en direction du dispositif de projection 400 en couvrant les sorties 84a, 84b, 86a et 86b.

Dans un autre mode de réalisation préféré de l'invention, non représenté, les organes de guidage 79a et 79b sont cylindriques, parallèles entre eux et répartis le long de l'axe longitudinal Z du caisson 2'.

De manière avantageuse mais non obligatoire, plusieurs joints 61 sont disposés entre les parois 20a et 20b et les organes 79a et 79b, sont plus rapprochés de la zone d'admission 30 que les sorties 84a, 84b, 86a et 86b. Ces joints 61 permettent de contrôler l'espace entre les organes 79a et 79b et les parois 20a et 20b.

Lors du fonctionnement du système 10', les volumes internes V20a et V20b de chaque caisson 2 sont alimentés en air comprimé par le compresseur 4. L'air comprimé s'échappe des volumes internes V20a et V20a du caisson 2 par les sorties 84a à 92b de sorte que chaque sortie produise un flux d'air.

Premièrement, une partie de l'air comprimé s'échappe par les sorties extrêmes 88a et 88b, de part et d'autre du dispositif 400 et du flux projeté Fp de liquide phytosanitaire L, sous la forme d'un premier flux laminaire F3 qui contribue à l'entrainement du flux Fp vers l'extérieur du caisson 2, le long de l'axe X1.

Deuxièmement, une partie de l'air comprimé s'échappe par les sorties intérieures 86a et 86b, sous la forme d'un deuxième flux d'air laminaire F4 qui progresse dans le passage 24 en direction du col 35. Ces flux d'air F4, lorsqu'ils quittent l'espace délimité entre les organes 79a et 79b et les parois 20a et 20b pour rejoindre le passage 24, sont plaqués, par effet Coanda, le long des portions internes 23a et 23b. Ces flux F4 sont inducteurs : ils entrainent, par frottement, un flux Fv d'air induit extérieur au caisson 2' qui est aspiré dans le passage 24 au niveau de la zone d'admission 30, et qui est entrainé dans le passage 24 jusqu'à la zone de projection 40. La géométrie convergente puis divergente du passage 24 permet au flux Fv d'être accéléré dans le passage 24 par effet Venturi. Au niveau de la zone de projection 40, le flux Fv présente donc une vitesse plus importante qu'au niveau de la zone d'admission 30. Les flux Fv et F4 forment un flux d'air central Fc sous pression, qui circule dans le passage 24 en direction de la zone de projection 40 et s'écoule autour du dispositif 400.

Troisièmement, une partie de l'air comprimé s'échappe par les sorties extérieures 84a et 84b, entre les organes 79a et 79b et les portions externes 25a et 25b, sous la forme d'un flux d'air F2 dirigé en direction de la zone de projection 40. Ces flux F2 sont inducteurs : ils entrainent par frottement des flux Fi d'air induit extérieur au caisson 2'.

Quatrièmement, une partie de l'air comprimé s'échappe par les sorties intérieures 92a et 92b, sous la forme d'un flux d'air sous pression F1 dirigé directement sur les buses d'injection 170.

Lorsque l'on s'intéresse plus particulièrement à l'un des dispositifs 400 et aux sorties 84a à 88b situées dans un plan de section transversale du caisson 2' proche de ce dispositif 400, on remarque que les flux laminaires F3 entrainent le flux de liquide phytosanitaire Fp et l'éloignent du caisson 2' de sorte que le flux de liquide phytosanitaire Fp rejoint les flux inducteurs F2 et les flux d'air induit Fi.

Le dispositif 400 présente un fonctionnement similaire au dispositif 100 du premier mode de réalisation. A partir du flux F1, des moyens d'acheminement du flux d'air central F120 et F140 permettent d'entraîner l'organe rotatif, de gaver la dépression de la chambre d'échappement, de modifier la trajectoire du flux liquide centrifugé, et d'entraîner les gouttes de liquide de traitement jusqu'aux nappes d'air latérales, lesquelles sont constituées des flux d'air latéraux laminaires F2 et F3 et induits Fi. En particulier, ces moyens d'acheminement comprennent au moins une buse 170 agencée dans une paroi du dispositif 400 et configurée pour prélever un flux d'air F1 d'un côté de cette paroi qui est opposé à l'organe rotatif, c'est-à-dire dans le passage 24, pour former le flux d'air central F120 et F140.

En variante non représentée, le dispositif 400 peut être disposé de manière différente du côté de la zone de projection 40. Par exemple, lorsque le dispositif 400 recouvre les orifices 88a et 88b, le flux F120 peut être formé des flux F1, Fv, F4 et F3, tandis que les flux F2 et Fi forment les nappes d'air latérales. Dans ce cas, les orifices 92a et 92b ne sont pas nécessaires et les flux F3 alimentent directement les buses 170.

D'autres variantes de caissons différents des caissons 2 et 2' peuvent être mises en œuvre sans sortir du cadre de l'invention. Le système de pulvérisation 10, 10' ou similaire comprend au moins un caisson rigide allongé délimitant un volume interne, où un flux d'air sous pression F1 circule en direction d'au moins un dispositif de projection 100, 200, 300 ou 400. Le ou les dispositifs de projection sont répartis suivant une direction longitudinale Z1 du caisson 2 ou 2' à l'extérieur du son volume interne. Les moyens d'acheminement du flux d'air central vers l'organe rotatif équipant chaque dispositif de projection sont configurés pour prélever un flux d'air sous pression F1 et/ou F3 provenant du caisson 2 ou 2' pour former le flux d'air central.

Avantageusement, le système de pulvérisation 10, 10' ou similaire comporte des moyens de formation d'au moins un flux d'air latéral Fi, F2 et/ou F3 apte à entraîner le flux liquide pulvérisé suivant la direction de pulvérisation correspondante. Le ou les flux d'air latéraux Fi, F2 et/ou F3 comprennent notamment un flux laminaire F2 et/ou F3 et un flux induit Fi.

Quel que soit le mode de réalisation, les moyens d'acheminement du flux d'air central vers l'organe rotatif comportent des moyens de circulation du flux d'air central depuis la première chambre vers la chambre d'échappement. En particulier, l'organe compartimenteur comporte un ou plusieurs orifices de guidage de l'air vers la chambre d'échappement.

Ces orifices ou moyens de circulation d'air sont agencés sensiblement sur deux côtés de l'organe compartimenteur qui sont diamétralement opposés de part et d'autre de l'axe central.

Le flux d'air central contribue à gaver la dépression de la chambre d'échappement, à modifier la trajectoire du flux liquide centrifugée, et à entraîner les gouttes de liquide de traitement jusqu'aux nappes d'air latérales, lesquelles sont constituées des flux d'air latéraux laminaires et induits.

Avantageusement, les moyens d'entraînement sont agencés dans la première chambre délimitée par l'organe compartimenteur, et non dans la chambre d'échappement. Dans ce cas, la première chambre peut être adaptée spécifiquement pour recevoir ces moyens d'entraînement, en particulier lorsqu'ils comprennent une turbine, et pour favoriser la circulation du flux d'air central relativement à ces moyens d'entraînement et vers la chambre d'échappement. De son côté, la chambre d'échappement est configurée spécifiquement pour remplir sa fonction d'échappement en amont de l'organe rotatif.

La présente invention permet de réaliser des installations mobiles de pulvérisation, comprenant plusieurs dispositifs de projection et destinées aux applications agricoles, arboricoles et viticoles. Chaque dispositif selon l'invention se présente sous la forme d'une buse à disque centrifuge améliorée par comparaison avec les buses rotatives et gicleurs existants.

Les caractéristiques techniques des différents modes de réalisation peuvent être, en totalité ou pour certaines d'entres elles, combinées entre elles pour former d'autres modes de réalisation non représentés. Ainsi, le système de pulvérisation peut être adapté à l'application visée.

## Revendications

1. Dispositif de projection (100 ; 200 ; 300 ; 400) de liquide de traitement (L), comprenant :
- des moyens (180 ; 280 ; 380) d'alimentation en liquide de traitement (L),
- un organe rotatif (140 ; 240 ; 340) qui est entraîné en rotation (Rx) autour d'un axe central (X1) par des moyens (110, 120, 170 ; 210, 220; 390) d'entrainement et qui est configuré pour projeter le liquide de traitement (L) sous forme d'un flux liquide centrifuge (Fp1), et
- des moyens (103, 130, 170 ; 203, 230; 303, 330) d'acheminement d'un flux d'air central (F120, F140 ; F220, F240 ; F320, F340) vers l'organe rotatif (140 ; 240 ; 340), ce flux d'air central étant apte, d'une part, à entraîner le flux liquide centrifuge (Fp1) suivant au moins une direction de pulvérisation (Dp) sous forme d'un flux liquide pulvérisé (Fp) et, d'autre part, à gaver une chambre d'échappement (107 ; 207 ; 307) située en amont et radialement autour de l'organe rotatif (140 ; 240 ; 340) suivant la direction de pulvérisation (Dp),
- les moyens (103, 130, 170 ; 203, 230 ; 303, 330) d'acheminement du flux d'air central (F120, F140 ; F220, F240 ; F320, F340) vers l'organe rotatif (140 ; 240 ; 340) comprenant un organe compartimenteur (130 ; 230 ; 330) qui délimite, d'une part, une première chambre (106 ; 206 ; 306) dans laquelle circule le flux d'air central et, d'autre part, la chambre d'échappement (107 ; 207 ; 307) configurée pour acheminer le flux d'air central à l'interface avec le flux liquide centrifuge (Fp1),
- l'organe compartimenteur (130 ; 230 ; 330) comportant des moyens (137 ; 237; 337) de circulation du flux d'air central (F120, F140 ; F220, F240 ; F320, F340) depuis la première chambre (106 ; 206 ; 306) vers la chambre d'échappement (107 ; 207 ; 307), **caractérisé en ce que** :
- ces moyens de circulation d'air (137 ; 237 ; 337) sont répartis de manière non uniforme autour de l'axe central (X1), sur deux côtés (Yg, Yd) de l'organe compartimenteur (130 ; 230 ; 330) qui sont diamétralement opposés de part et d'autre d'un plan comprenant l'axe central (X1) et un axe longitudinal (Z1) perpendiculaire à l'axe central (X1), l'organe compartimenteur (130, 230, 330) étant dépourvu de moyens de circulation d'air (137 ; 237 ; 337) le long de l'axe longitudinal (Z1), de sorte que la direction de pulvérisation (Dp) du flux liquide pulvérisé (Fp) définisse un profil en ogive qui est basé sur l'organe rotatif (140 ; 240 ; 340) et qui est sensiblement aplati sur les deux côtés (Yg, Yd) diamétralement opposés de part et d'autre du plan.

2. Dispositif (100 ; 200 ; 300 ; 400) selon la revendication 1, **caractérisé en ce que** les moyens d'entraînement (110, 120, 170 ; 210, 220 ; 390) sont agencés dans la première chambre (106 ; 206 ; 306).

3. Dispositif (100 ; 400) selon l'une des revendications précédentes, **caractérisé en ce que** les moyens (103, 130, 170) d'acheminement du flux d'air central (F120, F140) vers l'organe rotatif (140) comprennent au moins une buse (170) agencée dans une paroi (102) du dispositif (100) et configurée pour prélever un flux d'air (F1) d'un côté de cette paroi (102) qui est opposé à l'organe rotatif (140) pour former le flux d'air central (F120, F140).

4. Dispositif (100 ; 200 ; 400) selon l'une des revendications précédentes, **caractérisé en ce qu'**il comprend des moyens (103, 130, 136, 170, 173, 174 ; 203, 230, 234, 239) d'ajustement d'un ou plusieurs paramètres d'écoulement du flux d'air central (F120, F140 ; F220, F240), et **en ce qu'**une variation d'un ou plusieurs paramètres est apte à modifier la direction de pulvérisation (Dp) du flux liquide pulvérisé (Fp) et/ou la vitesse de rotation (Rx) de l'organe rotatif (140 ; 240).

5. Dispositif (100 ; 200 ; 400) selon la revendication 4, **caractérisé en ce que** les paramètres d'écoulement du flux d'air central (F120, F140 ; F220, F240) incluent un débit et/ou une pression d'air variables.

6. Dispositif (200) selon l'une des revendications précédentes, **caractérisé en ce qu'**il comprend des moyens (234) de déplacement de l'organe compartimenteur (230) configurés pour ajuster un ou plusieurs paramètres d'écoulement du flux d'air central (F220, F240) et/ou pour modifier le volume de la première chambre (206).

7. Dispositif (100 ; 200 ; 400) selon l'une des revendications précédentes, **caractérisé en ce que** les moyens (110, 120, 170 ; 210, 220) d'entraînement en rotation (Rx) de l'organe rotatif (140 ; 240) comprennent une turbine (120 ; 220) qui est solidaire en rotation de l'organe rotatif, qui est munie de plusieurs ailettes (121 ; 221) et qui est située sur le trajet du flux d'air central (F120, F140 ; F220, F240), lequel est apte à entraîner conjointement la turbine et l'organe rotatif en rotation (Rx) autour de l'axe central (X1).

8. Dispositif (300) selon l'une des revendications 1 à 6, **caractérisé en ce que** les moyens d'entraînement en rotation (Rx) de l'organe rotatif (340) comprennent un moteur électrique (390) dont la vitesse de rotation est variable.

9. Dispositif (100 ; 200 ; 300 ; 400) selon l'une des revendications 1 à 8, caractérisé en ce les moyens (137 ; 237 ; 337) de circulation du flux d'air central (F120, F140 ; F220, F240 ; F320, F340) depuis la première chambre (106 ; 206 ; 306) vers la chambre d'échappement (107 ; 207 ; 307) comprennent des orifices ménagés dans une paroi (132) de l'organe compartimenteur (130 ; 230 ; 330) et répartis sensiblement sur les deux côtés (Yg, Yd) de l'organe compartimenteur (130 ; 230 ; 330) qui sont diamétralement opposés de part et d'autre du plan.

10. Dispositif (100 ; 200 ; 300 ; 400) selon l'une des revendications 1 à 8, **caractérisé en ce que** l'organe compartimenteur (130 ; 230 ; 330) comporte un alésage (138 ; 238 ; 338) qui est écarté, diamétralement par rapport à l'axe central (X1), d'un arbre (110 ; 210 ; 310) de support de l'organe rotatif (130 ; 230 ; 330), les moyens de circulation du flux d'air central (F120, F140 ; F220, F240 ; F320, F340) depuis la première chambre (106 ; 206 ; 306) vers la chambre d'échappement (107 ; 207 ; 307) comprenant un jeu qui est prévu entre l'alésage (138 ; 238 ; 338) et l'arbre (110 ; 210 ; 310) sur les deux côtés (Yg, Yd) de l'organe compartimenteur (130 ; 230 ; 330) qui sont diamétralement opposés de part et d'autre du plan.

11. Dispositif (100 ; 200 ; 300 ; 400) selon l'une des revendications 1 à 8, **caractérisé en ce que** l'organe compartimenteur (130 ; 230 ; 330) comporte un alésage (138 ; 238 ; 338) muni de cannelures réparties sur les deux côtés (Yg, Yd) de l'organe compartimenteur (130 ; 230 ; 330) qui sont diamétralement opposés de part et d'autre du plan, les moyens de circulation du flux d'air central (F120, F140 ; F220, F240 ; F320, F340) depuis la première chambre (106; 206; 306) vers la chambre d'échappement (107 ; 207 ; 307) comprenant les cannelures.

12. Dispositif (100; 200; 300; 400) selon l'une des revendications précédentes, **caractérisé en ce qu'**il comprend également un collecteur agencé radialement autour d'au moins une partie l'organe rotatif (140 ; 240 ; 340), le collecteur étant de préférence relié à un réservoir de liquide de traitement (L).

13. Système (10 ; 10') de pulvérisation d'un liquide de traitement (L), notamment dans un vignoble ou un verger, comportant au moins un dispositif de projection (100; 200; 300; 400) de liquide de traitement (L) selon l'une des revendications précédentes.

14. Système (10 ; 10') selon la revendication 13, **caractérisé en ce qu'**il comprend au moins un caisson rigide allongé (2 ; 2') délimitant un volume interne (V2 ; V20a, V20b), où un flux d'air sous pression (F1) circule en direction d'au moins un dispositif de projection (100 ; 200 ; 300 ; 400), le ou les dispositifs de projection (100 ; 200 ; 300 ; 400) étant répartis suivant une direction longitudinale (Z1) du caisson (2 ; 2') à l'extérieur du volume interne (V2 ; V20a, V20b) du caisson (2 ; 2'), et **en ce que** les moyens (103, 130, 170 ; 203, 230 ; 303, 330) d'acheminement du flux d'air central (F120, F140 ; F220, F240 ; F240, F340) vers l'organe rotatif (140 ; 240 ; 340) équipant chaque dispositif sont configurés pour prélever un flux d'air sous pression (F1 ; F3) provenant du caisson (2 ; 2') pour former le flux d'air central (F120, F140 ; F220, F240 ; F240, F340).

15. Système (10 ; 10') selon l'une des revendications 13 ou 14, **caractérisé en ce qu'**il comprend également des moyens (2, 83, 85 ; 2', 84a, 84b, 88a, 88b) de formation d'au moins un flux d'air latéral (F2, Fi ; F2, F3, Fi) apte à entraîner le flux liquide pulvérisé (Fp) suivant la direction de pulvérisation (Dp), le ou les flux d'air latéraux (F2, Fi ; F2, F3, Fi) comprenant en particulier un flux laminaire (F2 ; F2, F3) et un flux induit (Fi).

## Patentansprüche

1. Vorrichtung zum Versprühen (100; 200; 300; 400) von Behandlungsflüssigkeit (L), umfassend:
- Mittel (180; 280; 380) zum Zuführen der Behandlungsflüssigkeit (L),
- ein rotierendes Element (140; 240; 340), das durch Antriebsmittel (110, 120; 170; 210, 220; 390) um eine zentrale Achse (X1) zur Rotation (Rx) angetrieben wird und das dazu ausgebildet ist, die Behandlungsflüssigkeit (L) in Form eines zentrifugalen Flüssigkeitsstroms (Fp1) auszustoßen, und
- Mittel (103, 130, 170; 203, 230; 303, 330) zum Zuführen eines zentralen Luftstroms (F120, F140; F220, F240; F320, F340) zu dem rotierenden Element (140; 240; 340), wobei dieser zentrale Luftstrom dazu geeignet ist, einerseits, den zentrifugalen Flüssigkeitsstrom (Fp1) in Form eines Sprühflüssigkeitsstroms (Fp) in wenigstens einer Sprührichtung (Dp) anzutreiben und andererseits eine stromaufwärts und radial um das rotierende Element (140; 240; 340) in der Sprührichtung (Dp) angeordnete Abgaskammer (107; 207; 307) zu begasen,
- wobei die Mittel (103, 130, 170; 203, 230; 303, 330) zum Leiten des zentralen Luftstroms (F120, F140; F220, F240; F320, F340) zu dem rotierenden Element (140; 240; 340) ein Unterteilungselement (130; 230; 330) umfassen, das einerseits eine erste Kammer (106; 206; 306) begrenzt, in der der zentrale Luftstrom zirkuliert, und andererseits die Abgaskammer (107; 207; 307) begrenzt, die dazu ausgebildet ist, den zentralen Luftstrom zur Schnittstelle mit dem zentrifugalen Flüssigkeitsstrom (Fp1) zu leiten,
- wobei das Unterteilungselement (130; 230; 330) Mittel (137; 237; 337) zum Zirkulieren des zentralen Luftstroms (F120, F140; F220, F240; F320, F340) von der ersten Kammer (106; 206; 306) zu der Abgaskammer (107; 207; 307) umfasst, **dadurch gekennzeichnet, dass**
- diese Luftzirkulationsmittel (137; 237; 337) ungleichmäßig um die zentrale Achse (X1) herum auf zwei Seiten (Yg, Yd) des Unterteilungselements (130; 230; 330) verteilt sind, die beidseits einer Ebene diametral gegenüberliegen, die die zentrale Achse (X1) und eine Längsachse (Z1) senkrecht zur zentralen Achse (X1) einschließt, wobei das Unterteilungsselement (130, 230, 330) entlang seiner Längsachse (Z1) frei von Luftzirkulationsmitteln (137; 237; 337) ist, so dass die Sprührichtung (Dp) des gesprühten Flüssigkeitsstroms (Fp) ein Spitzbogen-Profil definiert, das auf dem rotierenden Element (140; 240; 340) basiert und das auf den beiden diametral gegenüberliegenden Seiten (Yg, Yd) beidseits der Ebene im Wesentlichen abgeflacht ist.

2. Vorrichtung (100; 200; 300; 400) nach Anspruch 1, **dadurch gekennzeichnet, dass** die Antriebsmittel (110, 120, 170; 210, 220; 390) in der ersten Kammer (106; 206; 306) angeordnet sind.

3. Vorrichtung (100; 400) nach einem der vorhergehenden Ansprüche, **dadurch gekennzeichnet, dass** die Mittel (103, 130, 170) zum Leiten des zentralen Luftstroms (F120, F140) zu dem rotierenden Element (140) wenigstens eine Düse (170) umfassen, die in einer Wand (102) der Vorrichtung (100) angeordnet und dazu ausgebildet ist, einen Luftstrom (F1) einer Seite dieser Wand (102), die dem rotierenden Element (140) gegenüberliegt, aufzunehmen, um den zentralen Luftstrom (F120, F140) zu bilden.

4. Vorrichtung (100; 200; 400) nach einem der vorhergehenden Ansprüche, **dadurch gekennzeichnet, dass** sie Mittel (103, 130, 136, 170, 173, 174; 203, 230, 234, 239) zur Einstellung eines oder mehrerer Strömungsparameter des zentralen Luftstroms (F120, F140 ; F220, F240) umfasst, und dass eine Variation eines oder mehrerer Parameter dazu geeignet ist, die Sprührichtung (Dp) des gesprühten Flüssigkeitsstroms (Fp) und/oder die Rotationsgeschwindigkeit (Rx) des rotierenden Elements (140; 240) zu verändern.

5. Vorrichtung (100; 200; 400) nach Anspruch 4, **dadurch gekennzeichnet, dass** die Strömungsparameter des zentralen Luftstroms (F120, F140; F220, F240) einen variablen Luftdurchsatz und/oder Luftdruck umfassen.

6. Vorrichtung (200) nach einem der vorhergehenden Ansprüche, **dadurch gekennzeichnet, dass** diese Mittel (234) zum Bewegen des Unterteilungselements (230) umfasst, die dazu ausgebildet sind, einen oder mehrere Strömungsparameter des zentralen Luftstroms (F220, F240) einzustellen und/oder das Volumen der ersten Kammer (206) zu modifizieren.

7. Vorrichtung (100; 200; 400) nach einem der vorhergehenden Ansprüche, **dadurch gekennzeichnet, dass** die Antriebsmittel (110, 120, 170; 210, 220) für die Rotation (Rx) des rotierenden Elements (140; 240) eine Turbine (120; 220) umfassen, die mit dem rotierenden Element drehfest ist, die mit einer Vielzahl von Schaufeln (121; 221) versehen ist und die sich auf dem Weg des zentralen Luftstroms (F120, F140; F220, F240) befindet, der dazu geeignet ist, die Turbine und das rotierende Element (Rx) gemeinsam um die zentrale Achse (X1) zu drehen.

8. Vorrichtung (300) nach einem der Ansprüche 1 bis 6, **dadurch gekennzeichnet, dass** die Antriebsmittel für die Rotation (Rx) des rotierenden Elements (340) einen Elektromotor (390) umfassen, dessen Rotationsgeschwindigkeit variabel ist.

9. Vorrichtung (100; 200; 300; 400) nach einem der Ansprüche 1 bis 8, **dadurch gekennzeichnet, dass** die Mittel (137; 237; 337) zum Zirkulieren des zentralen Luftstroms (F120, F140; F220, F240; F320, F340) von der ersten Kammer (106; 206; 306) zur Abgaskammer (107; 207; 307) Öffnungen umfassen, die in einer Wand (132) des Unterteilungselements (130; 230; 330) ausgespart sind und im Wesentlichen auf beiden Seiten (Yg, Yd) des Unterteilungselements (130; 230; 330) verteilt sind; die sich beidseits der Ebene diametral gegenüberliegen.

10. Vorrichtung (100; 200; 300; 400) nach einem der Ansprüche 1 bis 8, **dadurch gekennzeichnet, dass** das Unterteilungselement (130; 230; 330) eine Bohrung (138; 238; 338) aufweist, die diametral zu einer zentralen Achse (X1) zu einer Stützwelle (110; 210; 310) des rotierenden Elements (130; 230; 330) beabstandet ist, wobei die Mittel zum Zirkulieren des zentralen Luftstroms (F120, F140; F220, F240; F320, F340) von der ersten Kammer (106; 206; 306) zur Abgaskammer (107; 207; 307) ein Spiel aufweisen, das zwischen der Bohrung (138; 238; 338) und der Welle (110; 210; 310) auf beiden Seiten (Yg, Yd) des Unterteilungselements (130; 230; 330) vorgesehen ist, die sich beidseits der Ebene diametral gegenüberliegen.

11. Vorrichtung (100; 200; 300; 400) nach einem der Ansprüche 1 bis 8, **dadurch gekennzeichnet, dass** das Unterteilungselement (130; 230; 330) eine Bohrung (138; 238; 338) aufweist, die mit Rillen versehen ist, die auf beiden Seiten (Yg, Yd) des Unterteilungselements (130; 230; 330), die sich beidseits der Ebene diametral gegenüber liegen, verteilt sind, wobei die Mittel zum Zirkulieren des zentralen Luftstroms (F120, F140; F220, F240; F320, F340) von der ersten Kammer (106; 206; 306) zur Abgaskammer (107; 207; 307) Rillen umfassen.

12. Vorrichtung (100; 200; 300, 400) nach einem der vorhergehenden Ansprüche, **dadurch gekennzeichnet, dass** sie auch einen Kollektor umfasst, der radial um wenigstens einen Teil des rotierenden Elements (140; 240; 340) herum angeordnet ist, wobei der Kollektor vorzugsweise mit einem Tank für die Behandlungsflüssigkeit (L) verbunden ist.

13. System (10; 10') zum Versprühen einer Behandlungsflüssigkeit (L), insbesondere in einem Weinberg oder einem Obstgarten, umfassend wenigstens eine Vorrichtung zum Versprühen (100; 200; 300; 400) von Behandlungsflüssigkeit (L) nach einem der vorhergehenden Ansprüche.

14. System (10; 10') nach Anspruch 13, **dadurch gekennzeichnet, dass** es wenigstens ein längliches starres Gehäuse (2; 2') umfasst, das ein Innenvolumen (V2; V20a, V20b) begrenzt, in dem ein Druckluftstrom (F1) in Richtung wenigstens einer Sprühvorrichtung (100; 200; 300; 400) zirkuliert, wobei die Sprühvorrichtung(en) (100; 200; 300; 400) entlang einer Längsachse (Z1) des Gehäuses (2; 2') außerhalb des Innenvolumens (V2; V20a, V20b) des Gehäuses (2; 2') angeordnet sind, und dass die Mittel (103, 130, 170; 203, 230; 303, 330) zum Leiten des zentralen Luftstroms (F120, F140; F220, F240; F240, F340) zu dem jede Vorrichtung (100; 200; 300; 400) ausrüstenden rotierenden Element (140; 240; 340) dazu ausgebildet sind, einen Druckluftstrom (F1; F3) aus dem Gehäuse (2; 2') zu entnehmen, um den zentralen Luftstrom (F120, F140; F220, F240; F240, F340) zu bilden.

15. System (10; 10') nach einem der Ansprüche 13 oder 14, **dadurch gekennzeichnet, dass** es ferner Mittel (2, 83, 85; 2', 84a, 84b, 88a, 88b) zur Bildung wenigstens eines seitlichen Luftstroms (F2, Fi; F2, F3, Fi) umfasst, dazu geeignet, den Sprühflüssigkeitsstrom (Fp) in der Sprührichtung (Dp) anzutreiben, wobei die seitliche(n) Luftströmung(en) (F2, Fi; F2, F3, Fi) insbesondere eine laminare Strömung (F2; F2, F3) und eine induzierte Strömung (Fi) umfassen.

## Claims

1. A device (100; 200; 300; 400) for projecting a treatment liquid (L), comprising:
- means (180; 280; 380) for supplying treatment liquid (L),
- a rotary member (140; 240; 340) which is rotatably driven (Rx) about a central axis (X1) by driving means (110, 120, 170; 210, 220; 390) and which is configured to project the treatment liquid (L) as a centrifugal liquid stream (Fp1), and
- means (103, 130, 170; 203, 230; 303, 330) for conveying a central air stream (F120, F140; F220, F240; F320, F340) to the rotary member (140; 240; 340), this central air stream being capable, on the one hand, of driving the centrifugal liquid stream (Fp1) along at least one spraying direction (Dp) as a sprayed liquid stream (Fp) and, on the other hand, of feeding an exhaust chamber (107; 207; 307) located upstream and radially about the rotary member (140; 240; 340) along the spraying direction (Dp),
- the means (103, 130, 170; 203, 230; 303, 330) for conveying the central air stream (F120, F140; F220, F240; F320, F340) to the rotary member (140; 240; 340) comprising a partitioning member (130; 230; 330) which delimits, on the one hand, a first chamber (106; 206; 306) in which the central air stream circulates and, on the other hand, the exhaust chamber (107; 207; 307) configured to convey a central air stream to the interface with the centrifugal liquid stream (Fp1),
- the partitioning member (130; 230; 330) comprising means (137; 237; 337) for circulating the central air stream (F120, F140; F220, F240; F320, F340) from the first chamber (106; 206; 306) to the exhaust chamber (107; 207; 307), **characterised in that**:
- these air circulation means (137; 237; 337) are unevenly distributed about the central axis (X1), on two sides (Yg, Yd) of the partitioning member (130; 230; 330) which are diametrically opposite on either side of a plane comprising the central axis (X1) and a longitudinal axis (Z1) perpendicular to the central axis (X1), the partitioning member (130; 230; 330) being devoid of air circulation means (137; 237; 337) along the longitudinal axis (Z1), so that the spraying direction (Dp) of the sprayed liquid stream (Fp) defines an ogive-shaped profile which is based on the rotary member (140; 240; 340) and which is substantially flattened on both sides (Yg, Yd) diametrically opposite on either side of the plane.

2. The device (100; 200; 300; 400) according to claim 1, **characterised in that** the driving means (110, 120, 170; 210, 220; 390) are arranged in the first chamber (106; 206; 306).

3. The device (100; 400) according to one of the preceding claims, **characterised in that** the means (103, 130, 170) for conveying the central air stream (F120, F140) to the rotary member (140) comprise at least one nozzle (170) arranged in a wall (102) of the device (100) and configured to take in an air stream (F1) from a side of this wall (102) which is opposite to the rotary member (140) in order to form the central air stream (F120, F140).

4. The device (100; 200; 400) according to one of the preceding claims, **characterised in that** it comprises means (103, 130, 136, 170, 173, 174; 203, 230, 234, 239) for adjusting one or several flow parameters of the central air stream (F120, F140; F220, F240), and **in that** a variation in one or more parameters is capable of modifying the spraying direction (Dp) of the sprayed liquid stream (Fp) and/or the rotational speed (Rx) of the rotary member (140; 240).

5. The device (100; 200; 400) according to claim 4, **characterised in that** the flow parameters of the central air stream (F120, F140; F220, F240) include a variable air flow rate and/or pressure.

6. The device (200) according to one of the preceding claims, **characterised in that** it comprises means (234) for moving the partitioning member (230) configured to adjust one or more flow parameters of the central air stream (F220, F240) and/or to modify volume of the first chamber (206).

7. The device (100; 200; 400) according to one of the preceding claims, **characterised in that** the means (110, 120, 170; 210, 220) for rotatably driving (Rx) the rotary member (140; 240) comprise a turbine (120; 220) which is rotatably integral with the rotary member, which is fitted with several vanes (121; 221) and which is located on the path of the central air stream (F120, F140; F220, F240), which is capable of jointly rotatably driving (Rx) the turbine and the rotary member about the central axis (X1).

8. The device (300) according to one of claims 1 to 6, **characterised in that** the means for rotatably driving (Rx) the rotary member (340) comprise an electric motor (390) the rotational speed of which is variable.

9. The device (100; 200; 300; 400) according to one of claims 1 to 8, **characterised in that** the means (137; 237; 337) for circulating the central air stream (F120, F140; F220, F240; F320, F340) from the first chamber (106; 206; 306) to the exhaust chamber (107; 207; 307) comprise ports provided in a wall (132) of the partitioning member (130; 230; 330) and substantially distributed on both sides (Yg, Yd) of the partitioning member (130; 230; 330) which are diametrically opposite on either side of the plane.

10. The device (100; 200; 300; 400) according to one of claims 1 to 8, **characterised in that** the partitioning member (130; 230; 330) comprises a bore (138; 238; 338) which is apart, diametrically relative to the central axis (X1), from a shaft (110; 210; 310) for supporting the rotary member (130; 230; 330), the means for circulating the central air stream (F120, F140; F220, F240; F320, F340) from the first chamber (106; 206; 306) to the exhaust chamber (107; 207; 307) comprising a clearance which is provided between the bore (138; 238; 338) and the shaft (110; 210; 310) on both sides (Yg, Yd) of the partitioning member (130; 230; 330) which are diametrically opposite on either side of the plane.

11. The device (100; 200; 300; 400) according to one of claims 1 to 8, **characterised in that** the partitioning member (130; 230; 330) comprises a bore (138; 238; 338) fitted with splines distributed on both sides (Yg, Yd) of the partitioning member (130; 230; 330) which are diametrically opposite on either side of the plane, the means for circulating the central air stream (F120, F140; F220, F240; F320, F340) from the first chamber (106; 206; 306) to the exhaust chamber (107; 207; 307) comprising the splines.

12. The device (100; 200; 300; 400) according to one of the preceding claims, **characterised in that** it also comprises a manifold radially arranged about at least one part of the rotary member (140; 240; 340), the manifold being preferably connected to a tank of treatment liquid (L).

13. A system (10; 10') for spraying a treatment liquid (L), especially in a vineyard or an orchard, comprising at least one device for projecting (100; 200; 300; 400) a treatment liquid (L) according to one of the preceding claims.

14. The system (10; 10') according to claim 13, **characterised in that** it comprises at least one elongated rigid case (2; 2') delimiting an inner volume (V2; V20a, V20b), where a pressurised air stream (F1) circulates towards at least one projecting device (100; 200; 300; 400), the projecting device(s) (100; 200; 300; 400) being distributed along a longitudinal direction (Z1) of the case (2; 2') outside the inner volume (V2; V20a, V20b) of the case (2; 2'), and **in that** the means (103, 130, 170; 203, 230; 303, 330) for conveying the central air stream (F120, F140; F220, F240; F320, F340) to the rotary member (140; 240; 340) fitting each device are configured to take in a pressurised air stream (F1; F3) coming from the case (2; 2') in order to form the central air stream (F120, F140; F220, F240; F240, F340).

15. The system (10; 10') according to one of claims 13 or 14, **characterised in that** it also comprises means (2, 83, 85; 2', 84a, 84b, 88a, 88b) for forming at least one lateral air stream (F2, Fi; F2, F3, Fi) capable of driving the sprayed liquid stream (Fp) along the spraying direction (Dp), the lateral air stream(s) (F2, Fi; F2, F3, Fi) comprising in particular a laminar stream (F2; F2, F3) and an induced stream (Fi).
